## Europäisches Patentamt

## European Patent Office

## Office européen des brevets

(19)

(11) Publication number: **0 107 309**
A1

(12) **EUROPEAN PATENT APPLICATION**

(21) Application number: **83305249.1**

(22) Date of filing: **08.09.83**

(51) Int. Cl.³: **F 02 M 25/06, G 05 D 16/06**

(30) Priority: **27.09.82 US 423506**

(43) Date of publication of application: **02.05.84 Bulletin 84/18**

(84) Designated Contracting States: **DE FR GB IT SE**

(71) Applicant: **BORG-WARNER CORPORATION, 200 South Michigan Avenue, Chicago Illinois 60604 (US)**

(72) Inventor: **Fox, Clarence Dennis, 2775 Essex Place, Decatur Illinois (US)**

(74) Representative: **Allden, Thomas Stanley et al, A.A. THORNTON & CO. Northumberland House 303-306 High Holborn, London WC1V 7LE (GB)**

(54) **Pressure control system.**

(57) A control valve (10) for controlling the fluid pressure to pressure operated (35) (pneumatic) devices. The fluid pressure source (33) provides fluid under pressure at a level that is relatively constant, whereas the pressure operated device (35) is controlled as a function of a varying signal pressure (31). The operating pressure is selectively vented to a reference chamber (26) for venting to the atmosphere in response to changes in the signal pressure (31). The composition and pressure of the signal fluid is unaltered by the pressure (vacuum) (33) source or pressure (vacuum) operated (35) device.

## PRESSURE CONTROL SYSTEM

### Description

This invention relates to a valve for use in controlling the fluid pressure to pressure operated devices. The valve controls the flow and thus the pressure to these devices in response to a signal from a monitored source. More specifically, this invention relates to a pressure or vacuum controller for pneumatically operable devices, referred to as slave devices, that are driven by fluid flow at a pressure derived from a pneumatic source. Such pneumatically-operable devices are known and utilized on automobiles as auxiliary devices, such as controls for air conditioners, windshield washers, EGR valves, and other devices.

In an automobile the above-noted pneumatic devices are frequently operated or controlled by a device which is itself subject to manifold vacuum from the engine. However, such a manifold vacuum controlling device bleeds or taps the engine manifold vacuum and thus upsets the balance of a metered fuel-air mixture to the combustion zone of the engine. As the engines in modern vehicles continue to have ever smaller displacements, any fuel-air mixture change or drain on the manifold vacuum degrades engine operation. Modern vehicles are generally equipped with either an air pump or vacuum pump. It is more desirable to operate auxiliary pneumatic devices from these air or vacuum pumps, as the added power drain from the engine power output would be negligible. Further, it is desired to operate such auxiliary devices in response to changes in the level of manifold vacuum without introducing entrained air to a fuel-air mixture.

Valves are available, especially in the exhaust gas recirculation, delay valve and fluid amplifier arts, that operate to control fluid flow and are operable by manifold vacuum. These prior art devices generally include combinations of diaphragm operators and biasing springs to control fluid flow in response to a vacuum signal, such as carburetor venturi vacuum or manifold vacuum. In some cases these prior art devices are extremely complex, solenoid operable or they provide extraneous air to the intake manifold, as is more frequently the case. In at least one case, fluid flow back to a vacuum reservoir or the intake manifold is prevented by the interposition of a check valve in the feed conduit.

U.S. Patent No. 3,739,797 teaches both a complex apparatus and a system with a check valve wherein a control valve and an EGR valve are shown in a combined system. However, the vacuum (pressure below atmospheric pressure) regulator disclosed therein was taught in U.S. Patent No. 3,125,111 which also shows a flap in a diaphragm to close the vacuum port 77 and controlled fluid flow by opening this port after introducing atmosphere into a control chamber 73. This operation provides a source of entrained air to the intake manifold when the vacuum port opens. A similar apparatus is disclosed in U.S. Patent No. 3,915,136 at FIG. 1, wherein a check valve 72 is interposed in conduit 27 to prevent back bleed to the manifold from vacuum control valve 26. Nakada et al. (Patent No. 3,866,588) discloses a single diaphragm operator wherein atmospheric air is supplied to the intake manifold in response to manifold vacuum, and a bleed passage through the diaphragm operator provides a means to balance the pressure on both sides of the diaphragm operator. U.S. Patent No. 3,861,642 teaches a treble diaphragm fluid control device with two manifold vacuum ports. One port 58 is open to atmospheric pressure through a bleed hole 86 when diaphragms 72 and 80 operate to open port 58. U.S. Patent No. 3,834,366 discloses an EGR valve with a single diaphragm operator which valve provides atmospheric communication to the vacuum source for controlling fluid flow. U.S. Patent No. 3,818,880 is similar in structure and function to the above-cited U.S. Patent No. 3,739,797 but adds a connecting means 38 between diaphragms 36 and 40 in an amplifier 28. U.S. Patent No. 3,799,131 teaches an EGR valve structure having a single diaphragm operating against the pressure from the source to be controlled. U.S. Patent No. 3,774, 583 teaches an EGR control system operable by a signal from carburetor venturi vacuum for control of manifold vacuum through an air bleed 126 to thus control a valve 100. U.S. Patent No. 3,762,384 discloses an EGR valve operable by venturi vacuum but having a source of atmospheric pressure through passages 108 and 92 into a chamber 78 which communicates to manifold 10 through a valve 84. U.S. Patent No. 3,741,240 teaches a manifold vacuum controller whose operation is controlled by introducing atmosphere to the vacuum chamber and thus back to the manifold. U.S. Patent No. 3,678,910 discloses a PCV valve which introduces air and fumes at atmospheric pressure to the intake manifold in response to manifold vacuum. U.S. Patent No. 3,048, 361 teaches a valve having a dual diaphragm operator with connecting and biasing means therebetween, but which provides an air bleed to the manifold for control. U.S. Patent No. 2,428,117 discloses a throttling and unlocking valve, which in the embodiment illustrated is solely responsive to a variable force from a single diaphragm and is designed to bleed atmospheric pressure to a vacuum pump. Also, bypass valves are taught in the Ford 1975 Car Shop Manual, Vol. 5 at pages 50-29-9 and 50-29-10. These bypass valves utilize a single diaphragm to bypass fluid flow from an air pump in response to changes in manifold vacuum but are not responsive to dynamic changes in fluid being controlled to throttle the fluid pressure and flow.

The invention encompasses a fluid flow control device operable in response to a vacuum signal where there is no dilution or pollution of this signal by the controlled fluid or by an atmospheric bleed port. Particularly, in an automotive application this valve structure provides a means to control a pressurized flow through the valve in proportion to changes in a vacuum signal, generally manifold vacuum, without entraining or bleeding atmospheric pressure into the manifold vacuum. This control operates as a function of change in the pressure signal as well as a function of changes in the vacuum signal. Alternative embodiments of this structure provide for varying the output pressure as a direct proportionate function of vacuum change, as an inverse function of such vacuum change, or as a means to control a vacuum source, that is, a source whose output pressure is less than atmospheric.

These embodiments provide a means to vary the ratio of a fluid output to a vacuum signal without degrading the vacuum signal. The degradation of such a vacuum signal is evidenced as a change in the metered air/fuel mixture ratio from a charge-forming device to the manifold in an automotive type engine. The controlled flow may be varied by changing the size of the
diaphragm operators and/or the force of biasing springs.
Control of the output pressure is accomplished by
bleeding in atmosphere through a vent port, without
altering the composition of the vacuum control signal.

In the figures of the drawings, like reference numerals identify like components and in the
drawings:

FIG. 1 is a schematic illustration of a
preferred embodiment of the flow control valve of the
present invention, and FIG. 1A is a graphical illustration of the directly proportional valve function;

FIG. 2 is a schematic representation of an
alternative embodiment of the flow control valve
of the present invention, and FIG. 2A is a graphical
illustration of its operation as an inverse function
of the vacuum signal; and

FIG. 3 is a schematic illustration of another
embodiment of the present invention, wherein the vacuum
level from a vacuum source is controlled in response to
a vacuum signal from an alternative vacuum means such as
manifold vacuum.

Control valve 10 of the present invention is
useful in an automotive application, for example, to
regulate fluid flow at a pressure to auxiliary, pressure
operable devices, which pressure is provided from a
pressure source such as an air pump. This fluid flow
through the control valve may be controlled as a function of changes in manifold vacuum without introducing
extraneous or entrained and unmetered air flow to the
intake manifold of an automobile engine to alter or
degrade the air-fuel mixture therein.

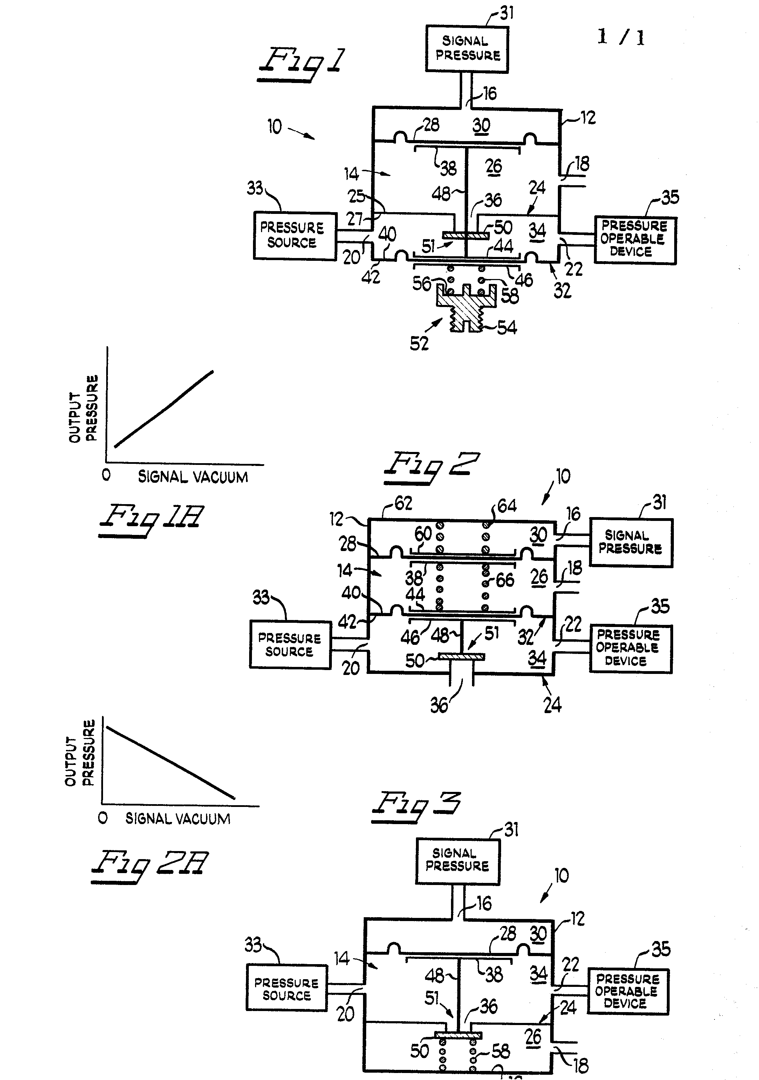

In FIG. 1 a control valve 10 has a valve housing or wall structure 12 defining an enclosure 14. Wall structure 12 defines a signal port 16, a reference pressure port 18, an inlet port 20 and an exit or outlet port 22. Enclosure 14 is divided into three chambers. A separating plate or member 24 defining a reference chamber face 25 and a transfer chamber face 27 is mounted in the body enclosure 14. Plate 24 cooperates with wall 12 to define a reference chamber 26 communicating with reference port 18. A signal chamber diaphragm operator 28 is positioned in chamber 26 and cooperates with wall structure 12 to define a signal chamber 30 sealed from reference chamber 26. Signal port 16 communicates between a source of signal pressure 31 and chamber 30. A second diaphragm operator 32 is mounted at the bottom of enclosure 14 in FIGURE 1 and cooperates with wall structure 12 and transfer face 27 of separating plate 24 to define transfer chamber 34. Inlet port 20 and outlet port 22 provide ingress and egress communication with transfer chamber 34 for a controlled fluid at a pressure from a pressure source 33 to a pressure operable device 35.

Separating plate 24 defines a centrally located vent port or bypass port 36 communicating between reference chamber 26 and transfer chamber 34. Affixed on diaphragm operator 28 in reference chamber 26 is a mounting plate 38. Diaphragm operator 32 has first and second sides 40 and 42 with mounting plates 44, 46 affixed to the diaphragm sides 40 and 42, respectively. A valve stem 48 extends through vent port 36 from mounting plate 38 to plate 44 and is operable by diaphragms 28 and 32. A valve assembly 51 includes stem 48 with a sealing means 50 affixed thereto in transfer chamber 34 to contact separating plate 24 to seal vent port 36.  A bias assembly 52 has a spring adjustment means 54, spring seat 56 and a bias spring 58.  Bias spring 58 is positioned between spring seat 56 and mounting plate 46, to bias diaphragm operator 32 and thus stem 48 with seal means 50 to seal vent port 36 in the reference position illustrated in FIG. 1.  Adjustment means 54 serves to adjust the spring 58 force to required operating parameters.

Control valve 10 of FIG. 1 controls an output fluid pressure at exit port 22 in direct proportion to an input vacuum signal pressure at port 16. Control is provided by venting the fluid pressure from chamber 34 to reference chamber 26 through vent port or bypass port 36.  Such control of the output pressure through exit port 22 as directly proportional to a variable vacuum signal pressure is illustrated graphically in FIG. 1A.  This control of output pressure by a monitored signal vacuum pressure is accomplished without degradation or a composition change of the vacuum signal source fluid.

FIG. 2 illustrates an alternative embodiment of control valve 10 wherein the output pressure through port 22 is varied as an inverse function of the monitored vacuum signal pressure at signal port 16 (see FIG. 2A).  In this embodiment separating plate 24 with vent port 36 forms a port of transfer chamber 34. Signal chamber diaphragm operator 28 cooperates with housing 12 to define signal chamber 30 with signal port 16 providing communication to a vacuum signal source.  Diaphragm 28 has mounting plate 38 in chamber 26, and a signal chamber mounting plate 60 affixed thereto in signal chamber 30.  Wall structure 12 defines an end wall 62 as part of signal chamber 30. Second diaphragm operator 32 is mounted in enclosure 14, with its first side 40 and second side 42 having mounting plates 44 and 46 respectively mounted thereon. Second diaphragm 32 cooperates with diaphragm operator 28 and wall structure 12 to define reference chamber 26 therebetween, which chamber 26 communicates to a reference pressure source, such as the atmosphere, through reference port 18. Diaphragm operator 32, wall structure 12 and separating plate 24 cooperate to define transfer chamber 34 therebetween. Chamber 34 communicates to a pressure source 33 through inlet port 20 and also to at least one pressure operable device 35 through exit port 22. Affixed to mounting plate 46 in transfer chamber 34 is stem 48 having sealing means 50 affixed thereto. Stem 48 and seal means 50 are operable by diaphragm operator 32. A first bias spring 64 is positioned in signal chamber 30 between end wall 62 and mounting plate 60. A second bias spring 66 is positioned in reference chamber 26 operable between mounting plates 38 and 44 of diaphragms 28 and 32, respectively. Bias springs 64 and 66 cooperate to provide a bias force to diaphragm 32 to maintain stem 48 and sealing means 50 in a normally closed position over vent port 36.

As depicted in FIG. 2A, the outlet pressure for this alternative embodiment varies as an inverse function of the signal vacuum pressure. In this embodiment as inlet pressure increases, it acts on second diaphragm 32 to open seal means 50 against the combined bias force of first and second bias springs 64 and 66. The vacuum signal in signal chamber 30 operates against the bias force of first bias spring 64. Thus, as the vacuum level increases (i.e., absolute pressure decreases below atmospheric pressure) in chamber 30 the bias force from first bias spring 64 acting to seal vent port 36 with seal means 50 is retracted and, therefore, the pressure in chamber 34 acting on second diaphragm operator 32 can be vented through port 36 at a lower pressure. This change in the biasing forces reduces the pressure required to open seal means 50 from vent port 36. First bias spring 64 affords more flexibility in controlling the rate of change of pressure with respect to the changes in the vacuum in signal chamber 30.

A third embodiment of the present invention illustrated in FIG. 3, is a control valve to control a vacuum output from a valve interposed between a vacuum source and at least one vacuum operable device. In this embodiment control valve 10 has an enclosed housing 12 defining enclosure 14, signal port 16, reference pressure port 18, an inlet port 20 and an outlet port 22. A separating plate 24 with a centrally located bypass port 36 is mounted in enclosure 14 and cooperates with housing 12 to define a reference chamber 26 wherein reference port 18 communicates between chamber 26 and a reference pressure source, such as atmospheric pressure. Also mounted in enclosure 14 is a diaphragm operator 28 which cooperates with housing 12 to define a signal chamber 30 where signal port 16 communicates between the signal chamber 30 and a vacuum source 31, such as a source of manifold vacuum. Diaphragm operator 28, housing 12 and separating plate 24 cooperate to define a transfer chamber 34. Inlet port 20 communicates between chamber 34 and a vacuum power source 33. Exit port 22 communicates between chamber 34 and at least one vacuum operable device 35. A mounting plate 38 is affixed to diaphragm 28 in transfer chamber 34.  A stem 48 connected to mounting plate 38 extends through chamber 34 and bypass port 36 into reference chamber 26 wherein a seal means 50 is affixed thereto to seal communication between reference chamber 26 and transfer chamber 34.  A bias spring 58 is positioned in chamber 26 between seal means 50 and an end wall 13 defined by housing 12.  Bias spring 58 provides a bias force to maintain seal means 50 against separating plate 24 to seal port 36 in the reference position illustrated in FIG. 3.

The control valve 10 of FIG. 3 operates to control output vacuum from a source 33 to vacuum-operable device 35 in direct proportion to a vacuum signal in signal chamber 30.  That is, the outlet vacuum in port 22 will track or vary with changes in the signal vacuum.  As the vacuum depression increases in signal chamber 30, a vacuum depression in chamber 34 greater than the sum of the force acting on diaphragm operator 28 in chamber 30 and bias spring 58 is required to open seal means 50 to vent transfer chamber 34 through vent port 36 to reference chamber 26.

## CLAIMS

1.   A pressure regulator control valve (10) connected to regulate a main pressure as a function of a signal pressure derived from a varying vacuum level, which valve (10) comprises:

a housing (12) defining a signal chamber (30) having a signal port (16) for receiving said signal pressure, a reference chamber (26) having at least one port (18) vented to atmosphere, and a transfer chamber (34) having an inlet port (20) for receiving fluid at the main pressure and an outlet port (22) for discharging said fluid;

a signal chamber diaphragm (28) positioned to form a part of said signal chamber and to be deflected responsive to variations of the signal pressure; and

a valve assembly (51) positioned for actuation to vent said transfer chamber to atmosphere, said valve (51) assembly having a stem (48) and sealing means (50) connected to said diaphragm (28) for regulating operation of the valve as a function of said signal pressure.

2.   A pressure regulator control valve (10) as claimed in Claim 1, wherein said varying vacuum level is derived from an engine manifold.

3.   A pressure regulator control valve (10) as claimed in Claim 1, wherein said sealing means (50) is located in said transfer chamber (34).

4. A pressure regulator control valve (10) as claimed in Claim 1, and further comprising:

a separating plate (24) sealingly positioned between said reference (26) and transfer chambers (34) and defining a normally-closed bypass port (36);

a second diaphragm (32) forming a wall of said transfer chamber (34), said stem (48) extending through said bypass port (36) and being connected to said signal chamber diaphragm (28), to said second diaphragm (32), and to said sealing means (50) for closing said bypass port (36);

a bias assembly (52) having a spring (54) adjustment means and a bias spring (58) positioned between said spring adjustment means (54) and said second diaphragm (32) to bias said sealing means (50) to close said bypass port (36) in the absence of a predetermined pressure difference between said transfer (34) and signal chambers (30).

5. A pressure regulator control valve (10) as claimed in Claim 4, wherein said sealing means (50) on said stem (48) is located in said transfer chamber (34).

6. A pressure regulator control valve (10) as claimed in Claim 4, wherein said valve is operable between a pressure source (33) and a pressure (35) operable device.

7. A pressure regulator control valve (10) as claimed in Claim 1, wherein said signal pressure is derived from an engine manifold.

8. A pressure regulator control valve (10) as claimed in Claim 1, wherein said reference signal is at atmospheric pressure.

9.  A pressure regulator control valve (10) as claimed in Claim 4, wherein said pressure communicated to said outlet port (22) increases as said vacuum level increases.

10.  A pressure regulator control valve (10) as claimed in Claim 1, and further comprising:

a separating plate (24) defining a wall of the transfer chamber (34) and a bypass port (36);

a second diaphragm (32) positioned and operable between said transfer chamber (34) and reference chambers (26), said stem (48) being affixed to said second diaphragm (32) has a sealing means (50) to seal said bypass port (36) in said transfer chamber (34);

a second bias spring (66) in said reference (26) chamber positioned between said signal chamber diaphragm (28) and said second diaphragm (32) and operable to bias said valve assembly (51) to close said bypass port (36); and

a first bias spring (64) positioned in said signal chamber (30) between said signal chamber diaphragm (28) and said housing (12) operable to bias said second spring and valve assembly to close said bypass port (36) in the absence of a predetermined pressure difference between said transfer (34) and signal chambers (30).

11.  A pressure regulator control valve (10) as claimed in Claim 10, wherein said main pressure communicated to said outlet port (22) decreases as said vacuum level increases.

12. A pressure regulator control valve (10) as claimed in Claim 10, wherein said signal pressure is an engine manifold vacuum pressure.

13. A pressure regulator control valve (10) as claimed in Claim 10, wherein said valve (10) is operable between a main pressure source (33) and at least one pressure operable device (35).

14. A pressure regulator control valve (10) as claimed in Claim 1, and further comprises:

a separating plate (24) positioned between said reference chamber (26) and said transfer chamber (34), and defining a wall of said reference and transfer chambers (26,34) and a bypass port (36); and

said valve assembly (51) to vent said transfer chamber (34) wherein said stem (48) protruding through said bypass port into said reference chamber (26) from said tranfer chamber (34) with said sealing means (50) affixed to said stem (48) in said reference chamber (26) and a bias spring (58) positioned in said reference chamber between said sealing means (50) and said housing (12) to bias said sealing means (50) to close said bypass port.

15. A pressure regulator control valve (10) as claimed in Claim 14, wherein said valve (10) is operable between a vacuum source (33) and a vacuum operable device (35) wherein said bias spring (58) operates to maintain said sealing means (50) to close said bypass port (36) to close with a predetermined force to maintain a vacuum level at or below a value equivalent to said bias spring force.

0107309

1 / 1

Fig 1

Fig 1A

Fig 2

Fig 2A

Fig 3

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y<br>A | US-A-3 861 642 (G.E. MADDOCKS)<br><br>* Figure 6; figures 3-5; claims * | 1,2,7,<br>8,10,<br>12-14 | F 02 M 25/06<br>G 05 D 16/06 |
| Y | EP-A-0 047 399 (EATON CORP.)<br>* Figure 3; page 8, line 8 - page 15, line 16 * | 1 | |
| A | US-A-4 002 154 (M.A. KESTNER) | | |
| A | US-A-3 926 204 (W.B. EARL) | | |
| A | US-A-4 108 197 (H.G. BRAKEBILL) | | |
| A | GB-A-2 060 065 (NISSAN MOTOR CO. LTD.) | | TECHNICAL FIELDS SEARCHED (Int. Cl. 3)<br><br>G 05 D<br>F 02 M |
| A | GB-A-2 076 942 (BORG-WARNER CORP.) | | |
| A | GB-A-2 076 940 (BORG-WARNER CORP.) | | |
| A | DE-A-3 043 527 (AISIN SEIKI K.K.) | | |
| | --- -/- | | |

The present search report has been drawn up for all claims

| Place of search<br>BERLIN | Date of completion of the search<br>02-01-1984 | Examiner<br>BEYER F |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| A | DE-A-2 822 337 (NIPPON SOKEN, INC.) | | |
| D,A | US-A-3 739 797 (R.B. CALDWELL) | | |
| D,A | US-A-3 125 111 (J.U. DALY) | | |
| D,A | US-A-3 915 136 (R.B. CALDWELL) | | |
| D,A | US-A-3 866 588 (M. NAKADA et al.) | | |
| D,A | US-A-3 834 366 (W.L. KINGSBURY) | | TECHNICAL FIELDS SEARCHED (Int. Cl. ³) |
| D,A | US-A-3 818 880 (G.D. DANSON et al.) | | |
| D,A | US-A-3 799 131 (R.A. BOLTON) | | |
| D,A | US-A-3 774 583 (J.B. KING) | | |
| D,A | US-A-3 762 384 (E.G. DAY et al.) | | |
| | --- -/- | | |

The present search report has been drawn up for all claims

| Place of search BERLIN | Date of completion of the search 02-01-1984 | Examiner BEYER F |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent Office

**EUROPEAN SEARCH REPORT**

Application number

EP 83 30 5249

| | DOCUMENTS CONSIDERED TO BE RELEVANT | | Page 3 | |
|---|---|---|---|---|
| Category | Citation of document with indication, where appropriate, of relevant passages | Relevant to claim | CLASSIFICATION OF THE APPLICATION (Int. Cl. ³) | |
| D,A | US-A-3 741 240 (L.P. BERRIMAN) | | | |
| D,A | US-A-3 678 910 (N.W. MARLETT) | | | |
| D,A | US-A-3 048 361 (P.L. FRANCIS) | | | |
| D,A | US-A-2 428 117 (J. KANUCH) | | | |

TECHNICAL FIELDS SEARCHED (Int. Cl. ³)

The present search report has been drawn up for all claims

| Place of search | Date of completion of the search | Examiner |
|---|---|---|
| BERLIN | 02-01-1984 | BEYER F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82